# EUROPÄISCHE PATENTSCHRIFT

(11) **EP 0 843 968 B1**
(45) Veröffentlichungstag und Bekanntmachung des Hinweises auf die Patenterteilung: **16.10.2002**
(21) Anmeldenummer: 97112602.4
(22) Anmeldetag: 23.07.1997
(51) Int. Cl.: A21C 1/00, B01F 15/00

(54) **Mehlentstaubungsanlage**
Plant for flour dust reduction
Installation pour le dipoussiérage des farines

(30) Priorität: 20.11.1996 DE 29620172 U
(43) Veröffentlichungstag der Anmeldung: 27.05.1998
(73) Patentinhaber: Kramer & Best Anlagenbau GmbH, 56281 Dörth (DE)
(72) Erfinder: Esper, Herbert Dipl. Ing. (TH), 56333 Winningen (DE)
(74) Vertreter: Grommes, Karl F., Dr.

(56) Entgegenhaltungen:
- EP-A- 0 673 656
- DE-A- 3 319 908
- DE-A- 3 744 172
- DE-A- 4 316 218
- FR-A- 2 199 481

## Beschreibung

### Technisches Gebiet

Die Erfindung betrifft eine Mehlentstaubungsanlage, insbesondere für Bäckereibetriebe, in denen sich bei der Mehlverarbeitung wenigstens an einer Mehlverarbeitungsstelle Mehlstaub entwickelt.

In Bäckereibetrieben bzw. in Backstuben wird bei den einzelnen Arbeitsvorgängen, wie beispielsweise der Hehleinlagerung, der Teigzubereitung, der Teigverarbeitung und der Mehlbestäubung von Brotkörbchen und Backgut Mehlstaub freigesetzt, welcher in die Raumluft gelangt. Schon bei geringer Konzentration kann es zu allergischen Reaktionen kommen, wie beispielsweise einer Rötung der Augen, einer Reizung der Nasenschleimhäute und Atemwege, was zu Unwohlsein und einem Leistungsabfall und nicht zuletzt auch zu einem Rückgang der Produktivität führt. Die körperliche Belastung durch Mehlstaub kann unter Umständen so stark sein, daß es zur Berufsunfähigkeit kommt.

Diese Problematik hat zu einer entsprechenden Unfallverhütungsvorschrift geführt: Unfallverhütungsvorschrift der BG Nahrungsmittel und Gaststätten Nr. 77, Nahrungsmittelmaschinen, (VBG 77), gültig ab 1. Oktober 1989. Auf Seite 22 ist unter J 22 vorgeschlagen, daß zur Vorbeugung gegen allergische Erkrankungen der Atemwege und der Haut ein Wert von 10 mg/m³ (Mehl) Gesamtstaub im Arbeitsbereich nicht unterschritten werden soll. Als Maßnahme hierfür wird eine Absaugung der (Mehl)-Stäube direkt an der Entstehungs- oder Austrittsstelle vorgeschlagen.

### Stand der Technik

Eine Mehlentstaubungsanlage der im Oberbegriff des Anspruchs 1 genannten Art ist aus der DE 43 16 218 A1 bekannt. Diese Mehlentstaubungsanlage ist zur Verringerung von Mehlstaub bei einer kombinierten Teigteil- und Rundwirkmaschine bestimmt, bei der ein Wirkband oder eine Wirktrommel über einen Mehlstreuer bemehlt wird, um ein Kleben abgeteilter Teilstücke beim Wirken und beim Abtransport gewirkter Teiglinge mittels Spreiz- oder Breitbändern zu vermeiden, wobei unmittelbar nach einer Umlenkung dieser als Endlosbänder ausgelegten Spreiz- oder Breitbänder anhaftendes Restmehl von rücklaufenden Bändern bzw. deren Untertrum abgesaugt wird. Zu diesem Zweck umfaßt die Absaugeinheit einen Saugschnabel, der mit seinem vorderen Saugschlitz an das jeweilige Endlosband angestellt ist. Das derart über die Absaugeinheit abgesaugte Restmehl wird unmittelbar zum Mehlstreuer rückgeführt, um Mehlverluste zu verringern. Diese bekannte Mehlentstaubungsanlage arbeitet vollständig ohne Filter, weil es darauf ankommt, einen möglichst großen Teil des Restmehls zum Mehlstreuer rückzuführen.

Ein Filter zur Reinigung von mit insbesondere Mehlstaub belasteter Abluft in beispielsweise Backstuben ist aus der DE 37 44 172 A1 bekannt. Dieser Filter besteht aus einem trommelförmigen Topf mit einer gitterartig ausgebildeten Topfwandung, auf deren Innenseite Filtermaterial angeordnet ist, das von einer luftdurchlässigen Decklage abgedeckt ist. Nachteilig an diesem bekannten Filter ist zum einen seine Trommelbauart, die bei einem Einsatz im Zusammenhang mit einer Mehlentstaubungsanlage relativ viel Platz einnimmt, und zum anderen die beschränkte Filterwirkung eines derartigen Filters.

Die Verwendung mehrstufiger Filter zum Reinigen von Luftströmen in Zu- und Abluftanlagen ist aus der EP-0 673 686-A bekannt.

Bekannt sind ferner nach dem Zyklonprinzip arbeitende Abscheider. Die Zyklonabscheidetechnik ist beispielsweise erläutert in SCHMIDT, P.: Möglichkeiten und Grenzen der Zyklonentstaubung. In: Getreide, Mehl und Brot, H. 12, 1991, S. 361-365.

### Darstellung der Erfindung

Eine Aufgabe der vorliegenden Erfindung besteht darin, eine Mehlentstaubungsanlage bereitzustellen, durch die die Mehlstaubbelastung in Bäckereibetrieben (Backstuben) noch wirksamer als bislang verringert werden kann.

Gelöst wird diese Aufgabe durch die Merkmale des Anspruchs 1. Vorteilhafte Weiterbildungen der Erfindung sind in den Unteransprüchen angegeben.

Mit anderen Worten schafft die Erfindung eine Mehlentstaubungsanlage, deren Absaugeinheit einen Mehlabscheider enthält, der eine mehrstufige Filterung der mit Mehl belasteten Abluft vorsieht, um diese Luft soweit reinigen zu können, daß sie gegebenenfalls zur Wiederverwendung in die Backstube rückgeführt werden kann, um dadurch zumindest in der kalten Jahreszeit Heizenergie einzusparen. In der warmen Jahreszeit hingegen, empfiehlt es sich, die warme gereinigte Luft als Fortluft ins Freie zu führen und Frischluft in die Backstube nachströmen zu lassen, wobei die Umwelt durch die ausgeleitete gereinigte Abluft vorteilhafterweise nicht belastet wird.

Wenn, wie dargetan, die Abluft über eine mehrstufige Filteranlage geleitet und gereinigt wird, können dadurch auch Pollen und Keime eliminiert werden. Dies gilt insbesondere, wenn Filter besonderer Tiefenschichtung zur Anwendung kommen. Im Ergebnis führt dies dazu, daß allergische Reaktionen und Atembeschwerden ausbleiben und die Berufsarbeit des Bäckers nicht länger beschwert wird.

Die erfindungsgemäß mit einem Mehlabscheider versehene Absaugeinheit der in Rede stehenden Mehlentstaubungsanlage enthält außerdem in an sich bekannter Weise einen Ventilator zur Erzeugung des erforderlichen Unterdrucks zum Ansaugen der mehlstaubhaltigen Abluft. Dieser Ventilator ist dem ersten Mehlabscheider nachgeschaltet, um seine Kontaminierung mit Mehlstaub zu verhindern. Das heißt, der erfindungsgemäße erste Mehlabscheider auf Grundlage einer mehrstufigen Filteranlage ist dem Ventilator vorgeschaltet, befindet sich also stromabwärts von diesem. Ergänzend hierzu ist dem Ventilator ein weiterer Mehlabscheider nachgeschaltet, um bei einer besonders hohen Belastung mit Mehlstaub auch vor allem feinstaubiges restliches Mehl aus der Abluft zu filtern, das durch den Mehlabscheider vor dem Ventilator gegebenenfalls nicht vollständig ausgefiltert wurde.

Die mehrstufige Filteranlage des erfindungsgemäßen Mehlabscheiders kann in den einzelnen Stufen entweder mehrere Filterarten derselben Art oder unterschiedlicher Art in Kombination aufweisen. Bevorzugt enthält die mehrstufige Filteranlage einen oder mehrere Beutelfilter und/oder einen oder mehrere Zyklonabscheider.

Gemäß einer besonders vorteilhaften Weiterbildung der Erfindung sind die Filter bzw. Abscheider der mehrstufigen Filteranlage des erfindungsgemäßen Mehlabscheiders in flachen Gehäusen enthalten, um die Mehlentstaubungsanlage im Bereich des Mehlabscheiders so platzsparend wie möglich zu bauen. Das heißt, der Mehlabscheider kann in platzsparender Weise z.B. an der Decke der Backstube aufgehängt sein. Eine kompakte, insbesondere kurze Bauweise wird erfindungsgemäß dadurch erreicht, daß die flachen Gehäuse des Mehlabscheiders direkt aneinander angedockt sind.

Ein weiterer wesentlicher Aspekt der Erfindung besteht darin, daß dem Mehlabscheider eine Füllstandsanzeige zugeordnet ist, um den Mehlabscheider stets im optimalen Betriebszustand betreiben zu können, d.h. rechtzeitig einen Austausch oder eine Säuberung seiner Filterelemente vornehmen zu können.

Obwohl mit der erfindungsgemäßen Mehlentstaubungsanlage mit einer relativ geringen, nur wenig Lärm entwickelnden, Absaugleistung bereits zufriedenstellende Ergebnisse erzielbar sind, kann zur weiteren Absenkung des Lärmpegels noch eine Schalldämmeinheit bzw. eine Schalldämmkulisse vorgesehen sein, die bevorzugt dem Ventilator bzw. dem Hochleistungsventilatorgebläse bzw. einem Luftverteilerkasten nachgeschaltet ist, von dem mehrere Absaugleitungen abzweigen.

### Kurze Beschreibung der Zeichnung

Nachfolgend wird die Erfindung anhand der Zeichnung beispielhaft näher erläutert; es zeigen:
- Fig. 1: eine schematische Ansicht einer Backstube mit einer Ausführungsform der erfindungsgemäßen Mehlentstaubungsanlage und

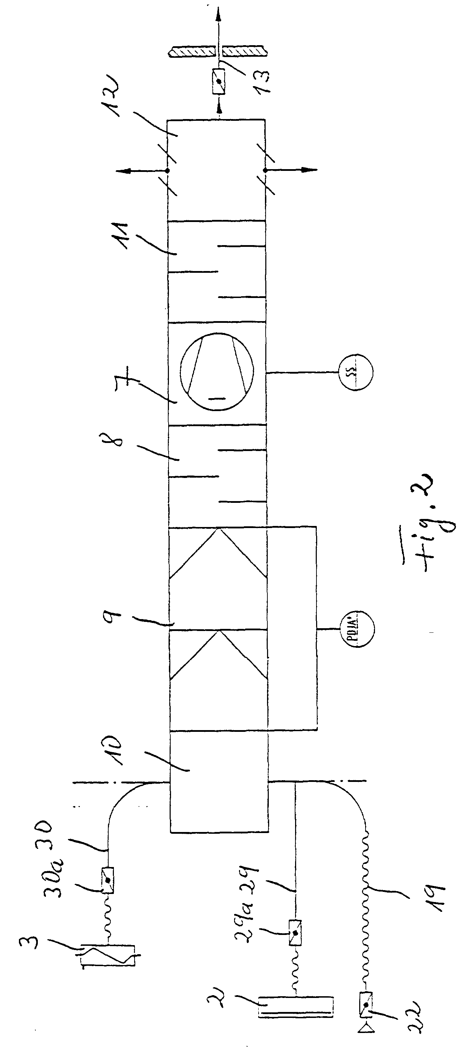

- Fig. 2: ein Fließbild der in Fig. 1 gezeigten Mehlentstaubungsanlage.

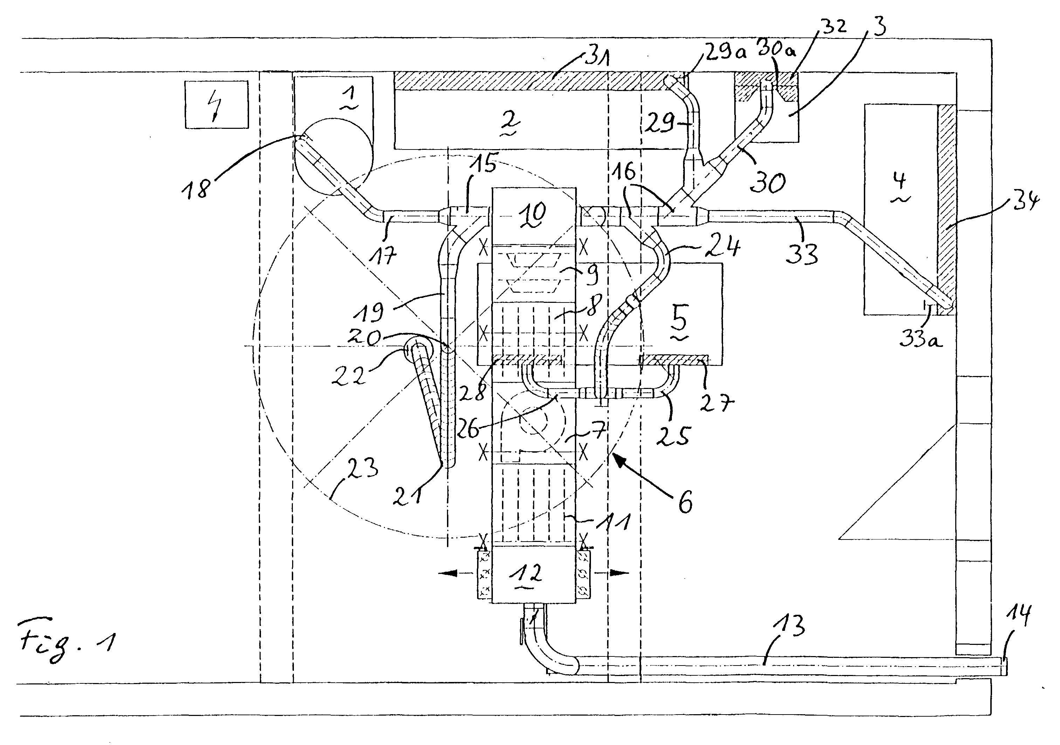

Die in Fig. 1 gezeigte Backstube weist verschiedene Mehlverarbeitungsstellen auf, an denen Mehlstaub freigesetzt wird, nämlich eine Teigmaschine 1, einen Mehl-Arbeitstisch 2, eine Teigteilmaschine 3, einen weiteren Arbeitstisch 4 und eine Teigausrollmaschine 5. Um den bei der Mehlverarbeitung entwickelten Mehlstaub unmittelbar an der Erzeugungsstelle abzusaugen, weist die Mehlentstaubungsanlage eine Absaugeinheit 6 und eine Vielzahl von Absaugleitungen auf.

Die Absaugeinheit 6 besteht erfindungsgemäß aus einer Vielzahl von aneinander angedockten Gehäusen in Flachbauweise, nämlich einem Gehäuse 7 mit einem vorzugsweise regelbaren Hochleistungsventilator, an das sich stromaufwärts ein Gehäuse 8 mit einer Mehrfach-Filteranordnung anschließt. Stromaufwärts von diesem Gehäuse schließt sich ein Gehäuse 9 mit einem Beutelfilter an und stromaufwärts von diesem schließt sich ein Gehäuse 10 mit einem Klimagerät an. Stromabwärts vom Ventilatorgehäuse 7 schließt sich ein weiteres Filtergehäuse 11 an, gefolgt stromabwärts von einem mit verriegelbaren Austrittsklappen versehenen Gehäuse 12 zum wahlweisen Ausleiten gereinigter (warmer) Abluft in die Backstube. Am Auslaß des Gehäuses 12 ist ferner eine Abluftleitung 13 über ein Klappenventil angeschlossen, die über eine Klappe bzw. Jalousie 14 ins Freie mündet.

An das am weitesten stromaufwärts liegende Gehäuse 10 sind beidseits Absaugleitungs-Verzweigungsstücke 15 und 16 angeschlossen. An die Verzweigung 15 ist eine Absaugleitung 17 angeschlossen, die in einem sich an die Verzweigung 15 anschließenden ersten Abschnitt horizontal und dann anschließend abwärts in Richtung auf die Teigmaschine 1 verläuft, über welcher sie mit einem abwärts auf die Teigmaschine zuweisenden Leitungsteil mündet, in dem eine Drosselklappe 18 angeordnet ist. Vom Verzweigungsstück 15 geht eine weitere Absaugleitung 19 ab, die bis zu einem Schwenkpunkt 20 starr verläuft bzw. verlegt ist, wonach die Leitung als schwenkbare, gegebenenfalls flexible und auf halber Strecke einen Knick 21 aufweisende Leitung verlegt ist, die an ihrem freien unteren Ende ebenfalls eine Drosselklappe 22 aufweist. Durch den Kreis 23 mit Zentrum im Schwenkpunkt 20 der Absaugleitung 19 ist der maximale Wirkungsbereich des Saugendes der Absaugleitung 19 bezeichnet. Das heißt, die Absaugleitung 19 eignet sich zum variablen Absaugen von Mehlstaub an beliebigen Orten innerhalb des Kreises 23, beispielsweise an einer Stelle, an welcher Mehl von einem Sack in einen Arbeitsbehälter umgeschüttet wird.

Von dem Verzweigungsstück 16 geht eine weitere Absaugleitung 24 ab, die im ersten Abschnitt starr verlegt ist und im weiteren Verlauf aus einer flexiblen Leitung besteht, die an ihrem Ende in zwei starre Leitungen 25, 26 verzweigt. Letztere münden (über Drosselklappen) in Absaugkästen 27 bzw. 28, die über der Ausrollmaschine 5 angeordnet sind, um von dieser Mehlstaub abzusaugen.

Von dem Verzweigungsstück 16 zweigen zwei weitere Absaugleitungen 29 und 30 ab, die im dargestellten Beispiel starr verlegt sind und ebenfalls über Drosselklappen 29a bzw. 30a jeweils in einen Absaugkasten 31 bzw. 32 über dem Mehlarbeitstisch 2 bzw. der Teigteilmaschine 3 münden, um dort Mehlstaub abzusaugen, der bei der Verarbeitung anfällt.

Ferner ist noch eine weitere Absaugleitung 33 von dem Verzweigungsstück 16 abgezweigt und verläuft als starres Rohr, über eine Drosselklappe 33a in einen Mehlabsaugkasten 34 mündend, der über dem Arbeitstisch 4 angeordnet ist.

Im Betrieb saugt das Gebläse bzw. der Ventilator im Gehäuse 7 unter Zwischenschaltung des Beutelfilters im Gehäuse 9 und des mehrstufigen Filters im Gehäuse 8 über die vorstehend erläuterten Absaugleitungen und Verzweigungsstücke den Mehlstaub am Ort seiner Entstehung ab und leitet ihn über das Gehäuse 11 (in dem ein weiterer Mehlabscheider, beispielsweise in Gestalt eines Mehrfachfilters angeordnet ist, wodurch auch der restliche Mehlstaubanteil zuverlässig ausgefiltert wird, der in den Mehlabscheidern in den Gehäusen 9 und 8 nicht ausgefiltert wurde) in das Abluftgehäuse 12 stromabwärts von dem Filtergehäuse 11, wo die gereinigte Luft zur Erwärmung der Backstube bei geöffneten Klappen in diese als Umluft ausgeleitet werden oder alternativ bei geschlossenen Klappen im Gehäuse 12 über das Abluftrohr 13 bei geöffneter Jalousie 14 als Fortluft ins Freie ausgetragen werden kann.

Somit betrifft die Erfindung eine Mehlentstaubungsanlage, insbesondere für Bäckereibetriebe, in denen sich bei der Mehlverarbeitung an wenigstens einer Verarbeitungsstelle Mehlstaub entwickelt, mit einer Absaugeinheit 6, die wenigstens einen Mehlabscheider enthält, der in Gestalt einer mehrstufigen Filteranlage aufgebaut ist, um mit Mehlstaub beladene Abluft wirkungsvoll so weit zu reinigen, daß diese Abluft am Ausgang des Mehlabscheiders als Reinluft zur Verfügung steht und gegebenenfalls im Umluftbetrieb der Raumluft in der Backstube zugesetzt werden kann. Durch den erfindungsgemäß vorgesehenen Mehlabscheider werden die einschlägigen Unfallverhütungsvorschriften betreffend Mehlstaubbelastung in Backstuben nicht nur erfüllt, sondern übertroffen.

## Patentansprüche

1. Mehlentstaubungsanlage, insbesondere für Bäckereibetriebe, in denen sich bei der Mehlverarbeitung an wenigstens einer Verarbeitungsstelle Mehlstaub entwickelt, mit einer Absaugeinheit (6) und wenigstens einer an diese angeschlossenen Absaugleitung (17, 19, 24, 29, 30, 33), die bis in die Nähe der Mehlentstaubungsstelle (1-5) reicht und für den Fall des Nichtgebrauchs eine Absperrarmatur (18, 22) aufweist, **dadurch gekennzeichnet, dass** die Absaugeinheit (6) ein Gebläse bzw. einen Ventilator (7) umfasst, dem ein erster Mehlabscheider (8, 9) vor- und ein zweiter Mehlabscheider (11) nachgeschaltet ist, und dass beide Mehlabscheider (8, 9; 11) einen mehrstufigen Filter enthalten.

2. Mehlentstaubungsanlage nach Anspruch 1, **dadurch gekennzeichnet, dass** zumindest der erste Mehlabscheider (8, 9) einen Beutelfilter (9) aufweist, der dem mehrstufigen Filter des Mehlabscheiders (8, 9) vorgeschaltet ist.

3. Mehlentstaubungsanlage nach Anspruch 1 oder 2, **dadurch gekennzeichnet, dass** zumindest einer der Mehlabscheider (8, 9; 11) einen Zyklonabscheider aufweist.

4. Mehlentstaubungsanlage nach Anspruch 1, 2 oder 3, **dadurch gekennzeichnet, dass** die jeweiligen Filterelemente der Mehlabscheider (8, 9; 11) in Gehäusen in Flachbauweise enthalten sind.

5. Mehlentstaubungsanlage nach Anspruch 1, **dadurch gekennzeichnet, dass** die Gehäuse in Flachbauweise direkt aneinander angedockt sind.

6. Mehlentstaubungsanlage nach einem der Ansprüche 1 bis 5, **dadurch gekennzeichnet, dass** die Mehlabscheider (8, 9; 11) eine Belastungs- bzw. Füllstandsanzeige aufweisen.

7. Mehlentstaubungsanlage nach einem der Ansprüche 1 bis 6, **dadurch gekennzeichnet, dass** eine Schalldämmeinheit bzw. -kulisse vorgesehen ist.

8. Mehlentstaubungsanlage nach einem der Ansprüche 1 bis 7, **dadurch gekennzeichnet, dass** die mehrstufigen Filter wenigstens einen Filter mit Tiefenschichtung zum Zurückhalten feiner und feinster Stäube aufweisen.

## Claims

1. Plant for flour dust reduction, particularly for bakeries in which flour dust is generated in the course of flour processing at at least one processing point, having an extractor unit (6) and at least one extraction duct (17, 19, 24, 29, 30, 33) connected thereto which extends into the vicinity of the flour dust reduction point (1-5) and which has a shut-off valve (18, 22) in case of non-use, **characterised in that** the extractor unit (6) comprises a blower or fan (7) which has a first flour separator (8, 9) connected upstream of it and a second flour separator (11) connected downstream of it, and **in that** both flour separators (8, 9, 11) include a multi-stage filter.

2. Plant for flour dust reduction according to claim 1, **characterised in that** at least the first flour separator (8, 9) has a bag filter (9) which is connected upstream of the multi-stage filter of the flour separator (8, 9).

3. Plant for flour dust reduction according to claim 1 or 2, **characterised in that** at least one of the flour separators (8, 9, 11) has a cyclone separator.

4. Plant for flour dust reduction according to claim 1, 2 or 3, **characterised in that** the respective filter elements of the flour separators (8, 9, 11) are contained in housings of shallow construction.

5. Plant for flour dust reduction according to claim 1, **characterised in that**. the housings of shallow construction are mated directly against one another.

6. Plant for flour dust reduction according to one of claims 1 to 5, **characterised in that** the flour separators (8, 9, 11) have a loading or filled level indicator.

7. Plant for flour dust reduction according to one of claims 1 to 6, **characterised in that** a soundproofing unit or louvre is provided.

8. Plant for flour dust reduction according to one of claims 1 to 7, **characterised in that** the multi-stage filters have at least one stratified filter to retain fine and very fine dust.

## Revendications

1. Installation de dépoussiérage des farines, en particulier pour des ateliers de boulangerie, dans lesquels lors de la transformation de la farine, en au moins un point de transformation, est développée une poussière de farine, avec une unité d'aspiration (6) et au moins une conduite d'aspiration (17, 19, 24, 29, 30, 33), raccordée à celle-ci, qui va jusqu'à proximité du point de dépoussiérage de farine (1 à 5) et présente, en cas de non utilisation, une robinetterie d'isolement (18, 22), **caractérisée en ce que** l'unité d'aspiration (6) comprend une soufflante ou un ventilateur (7), en amont duquel est installé un premier séparateur de farine (8, 9) et en aval duquel est installé un deuxième séparateur de farine (11), **en ce que** les deux séparateurs de farine (8, 9; 11) contiennent un filtre à plusieurs degrés de filtration.

2. Installation de dépoussiérage des farines selon la revendication 1, **caractérisée en ce qu'**au moins le premier séparateur de farine (8, 9) présente un filtre à sachets ou manches (9), installé en amont du filtre à plusieurs degrés de filtration du séparateur de farines (8, 9).

3. Installation de dépoussiérage des farines selon la revendication 1 ou 2, **caractérisée en ce qu'**au moins l'un des séparateurs de farine (8, 9; 11) présente un séparateur de type cyclone.

4. Installation de dépoussiérage des farines selon la revendication 1, 2 ou 3, **caractérisée en ce que** les éléments filtrants respectifs des séparateurs de farine (8, 9; 11) sont contenus dans des carters construits en éléments plats.

5. Installation de dépoussiérage des farines selon la revendication 1, **caractérisée en ce que** les carters construits en éléments plats sont accostés directement les uns aux autres.

6. Installation de dépoussiérage des farines selon l'une des revendications 1 à 5, **caractérisée en ce que** les séparateurs de farine (8, 9; 11) présentent une indication d'encrassement ou de niveau de remplissage.

7. Installation de dépoussiérage des farines selon l'une des revendications 1 à 6, **caractérisée en ce qu'**une unité ou une coulisse d'isolation sonore est prévue.

8. Installation de dépoussiérage des farines selon l'une des revendications 1 à 7, **caractérisée en ce que** les filtres à plusieurs degrés de filtration présentent au moins un filtre ayant un garnissage en stratification en profondeur, afin de retenir les poussières fines et extrêmement fines.
